# EUROPEAN PATENT APPLICATION

(11) **EP 1 855 465 A2**
(43) Date of publication of application: **14.11.2007**
(21) Application number: 07106728.4
(22) Date of filing: 23.04.2007
(51) Int. Cl.: H04N 5/232

(54) **Electronic device with a function to magnifying/reduce images in-situ and the applications of the same**

(30) Priority: 08.05.2006 CN 200610078534
(71) Applicant: High Tech Computer Corp., Taoyuan City, Taoyuan Hsien (TW)
(72) Inventor: Wang, John C., Taoyuan Hsien (TW)
(74) Representative: Viering, Jentschura & Partner

(57) **Abstract**

A handheld electronic device with a function for magnifying/reducing an initial image displayed on the hand held device, and displaying at least one magnifed/reduced image without shifting a focal point identified by the initial image and the applications of the same are provided. The handheld electronic device comprises a display unit, a position selector and an image magnification/reduction unit. The display unit is used for displaying the initial image and the at least one magnified/reduced image. The position selector is used to designate a datum mark associated with the focal point of the initial image. The image magnification/reduction unit, used to conduct at least one image magnification/reduction process to continually magnify/reduce the initial image in accordance with the datum mark, whereby each of the at least one magnified/reduced image is then displayed on the display unit immediately after each of the at least one magnification/reduction process.

## Description

### Field of the Invention

The present invention relates to a handheld electronic device and the applications thereof, and more particularly relates to a handheld electronic device with a function to magnifying/reduce images *in-situ* and the applications thereof.

### Background of the Invention

Nowadays, many handheld electronic devices provide built-in image -capture units. Currently most manufactures provide handheld electronic devices, such as cellular phones or personal digital assistants, with digital album functions so that users can both capture images and directly replay or view images previously captured on the handheld electronic device. However, the size of the screen set on the handheld electronic device is rather limited due to the size limitations of handheld electronic devices. Even though a greater size of liquid crystal liquid display is used, the identification of the images displayed on the screen still cannot be improved a lot. The worst images are those captured by telephotography.

To resolve the problems described above, a new generation of handheld electronic devices are provided with a touch screen to display an image thereon, by which the image displayed on the screen of the handheld electronic device can be magnified by a certain ratio when touch screen is touched with a finger or a stylus.

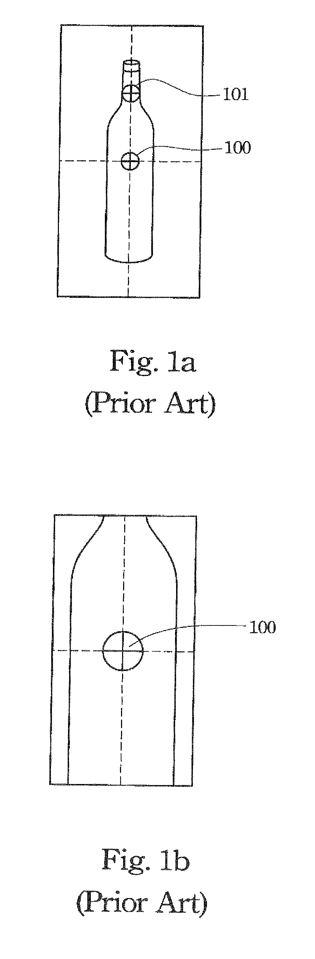

Fig.1a to Fig.1c illustrate a series of images that are displayed by the first conventional handheld electronic device with an image zoom function. Referring to Fig.1a, in accordance with the conventional handheld electronic device, a zoom-in operation is applied, when the image displayed on the screen is magnified by a fixed ratio radially from the center 100 of the screen zone.

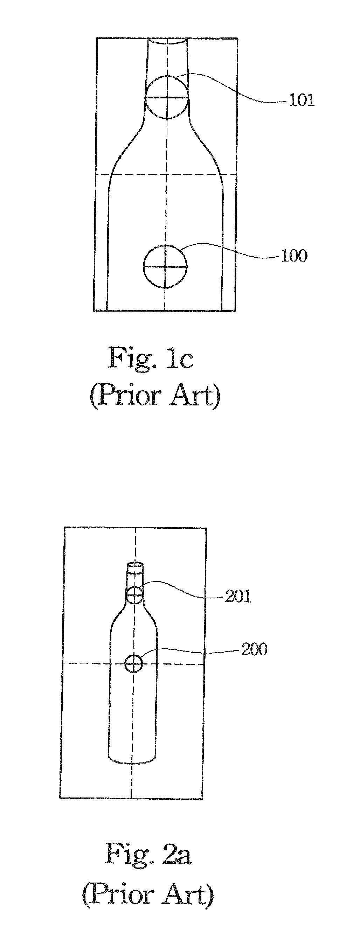

However, the focal point 101 of the image where a user wants to focus may be shifted out of the screen zone due to the zoom-in operation, referring to Fig. 1b. Thus the user should pull the focal point 101 back to the screen zone. Furthermore when the zoom-in operation does not achieve the desired magnification at one time, the zoom-in and pull operation should be repeated for several times until the desired magnification (shown in Fig. 1c) is achieved. Those operations are rather complicated and inconvenient, and hinder these handheld electronic devices from commercial success.

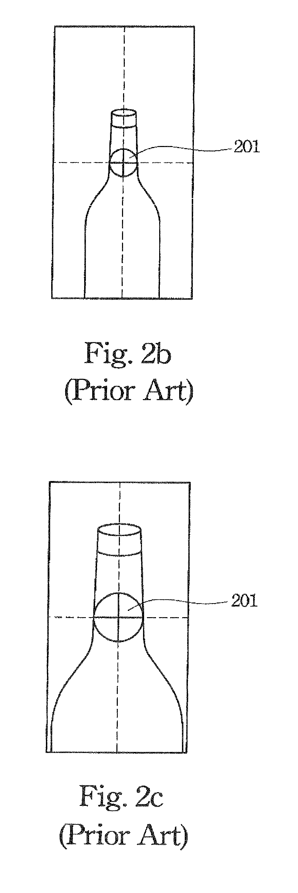

Another approach is to provide an image positioning technique incorporated with the zoom-in operation. Fig.2a to Fig. 2c illustrate a series of images that are displayed by the second conventional handheld electronic device. As shown in Fig.2a, a focal point 201 of the image is selected for zoom-in operation so that the image displayed on the screen is magnified at a fixed ratio radially therefrom. However, after the image is magnified the focal point 201 would be shifted to the center of the screen, shown in the Fig.2b. When the desired magnification is not achieved, the selection and magnifying processes may be repeated for several times until the desired magnification (shown in Fig. 2c) is achieved.

To resolve the questions described above, a handheld electronic device with a continuous-magnifying function is provided. However, it is still complicated to use this magnifying function. For example, some parameters, such as a predetermined magnification or other commands should be input before a user manipulate the touch screen to continually magnify the images.

### Summary of the Invention

Therefore, it is desirable to provide a handheld electronic device with a function to magnifying/reduce images *in-situ* and the applications of the same. At least one image magnification/reduction process can be duplicated to magnify/reduce an initial image that is displayed on a touch screen of the handheld electronic device merely by touching the touch screen associated with the image until the desired magnification is achieved.

One aspect of the present invention is to provide a handheld electronic device with a function for continually magnifying/reducing images *in-situ.* A user can merely touch the touch screen to designate a datum mark associated with a focal point of an initial image displayed on the touch screen of the handheld electronic device, and then at least one image magnification/reduction process can be conducted continually to magnify/reduce the initial image, and at least one magnified/reduced image can be displayed without shifting the initial focal point defined on the initial image. The continual magnification/reduction processes won't stop until the user stops touching the touch screen when the desired magnification is achieved.

In some embodiments of the present invention, the handheld electronic device comprises a display unit, an image magnification/reduction unit and a position selector. The display unit is used for displaying an image with a focal point indicating an area that a user focuses on or interests in. The position selector is used for designating a datum mark associated with the focal point of the image. The image magnfication/reduction unit is electrically connected to the display unit and the position selector respectively. The image magnification/reduction unit is used for conducting at least one magnification/reduction process continually to magnify/reduce the initial image in accordance with the datum mark until a desired magnification is achieved. The display unit is used for displaying at least one magnified/reduced image. In the embodiments of the present invention the handheld electronic device may be, but not limited to, a global positioning system (GPS), a personal digital assistant (PDA), a cellular phone, a digital camera, a notebook computer, a digital photo viewer, digital video displayer (DVD), or any handheld electronic device with an arbitrary combination thereof, such as a PDA with a telecommunication function or a PDA phone with a GPS.

Another aspect of the present invention is to provide a method to conduct at least one magnification/reduction process continually to magnify/reduce an initial image displayed on a screen of a handheld electronic device in a desired magnification without shifting the focal point initially defined on the initial image, wherein the handheld electronic device comprises an image magnification/reduction unit, and a position selector, such as a touch screen.

In some embodiments of the present invention, method comprises several steps as stated below. First, an initial image is displayed on a display unit of a handheld electronic device. Next, the position selector is used to designate a datum mark associated with the focal point of the initial image by touching the position selector. Subsequently, the magnification/reduction unit is used to conduct multiple magnification/reduction processes continually for magnifying/reducing the initial image in accordance with the datum mark to form at least one magnified/reduced image respectively. The continual magnification/reduction processes won't stop until the position selector is not touched and the desired magnification is achieved, whereby at least one magnified/reduced image is then displayed on the display unit without shifting the focal point of the initial image.

In accordance with the above descriptions, the features of the present invention reside in a handheld electronic device with a position selector to designate a datum mark associated with a focal point of an initial image that is displayed on a screen set on the handheld electronic device by touching the position selector. Multiple magnification/reduction processes to magnify/reduce the initial images are then continually conducted in accordance with the datum mark to form at least one magnifed/reduced image. The continual magnification/reduction processes won't stop until the position selector is not touched and the desired magnification is achieved. Then each of the magnified/reduced images is displayed on the screen. Since the datum mark is associated with the focal point of the image, and the continual magnification/reduction processes are conducted in accordance with the datum mark, the image is magnified/reduced without shifting the focal point of the initial image.

### Brief Description of the Drawings

The foregoing aspects and many of the attendant advantages of this invention will become more readily appreciated as the same becomes better understood by reference to the following detailed description, when taken in conjunction with the accompanying drawings, wherein:
Figs.1 a-1c illustrate a series of images that are displayed by the first conventional handheld electronic device with a function for magnifying a image.
Figs.2a-2c illustrate a series of images that are displayed by the second conventional handheld electronic device with a function for magnifying a image.
Figs.3a and 3b illustrate a series of images that are displayed by a handheld electronic device in accordance with a preferred embodiment of the present invention.
Fig. 4 illustrates schematic elements of the assembly of a cellular phone 400 in accordance with one preferred embodiment of the present invention.
Fig. 5 is a flow chart outlining the magnification/reduction process used by the cellular phone shown in Fig. 4, in accordance with the preferred embodiment of the present invention.

### Detailed Description of the Preferred Embodiment

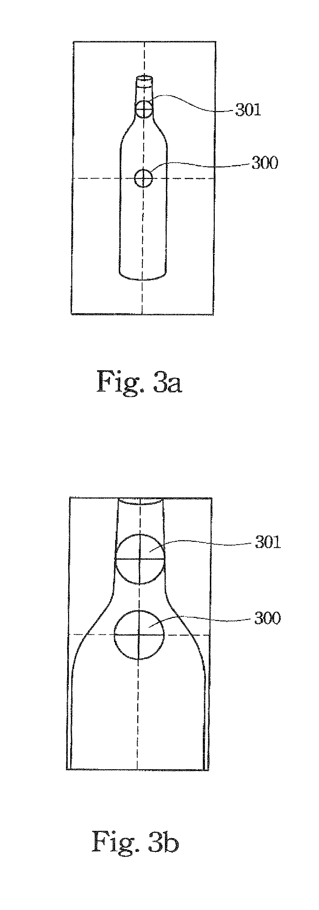

The features of the handheld electronic device with a function to magnifying/reduce images *in-situ* provided by the present invention are to conduct at least one image magnification/reduction process to magnify/reduce an initial image displayed on a screen of the handheld electronic device by an image magnification/reduction unit. A user can merely touch a position selector set on the handheld electronic device to designate a datum mark 301 (shown in Fig. 3a) associated with the focal point of the initial image, and then at least one image magnilication/reduction process can be conducted in accordance with the datum mark 301. The continual magnification/reduction processes won't stop until the position selector is not touched and the desired magnification is achieved, whereby the initial image can be magnified/reduced to a desired magnification without shifting the focal point of the initial (shown in Fig. 3b).

The foregoing aspects and many of the attendant advantages of this invention will become more readily appreciated as the same becomes better understood by reference to the following preferred embodiments, hereinafter further described. The handheld electronic device mentioned in these embodiments of the present invention is a cellular phone that has a digital camera and display unit set therein. Alternatively, the handheld electronic device may be a personal digital assistant (PDA) that has the same elements (functions) built therein.

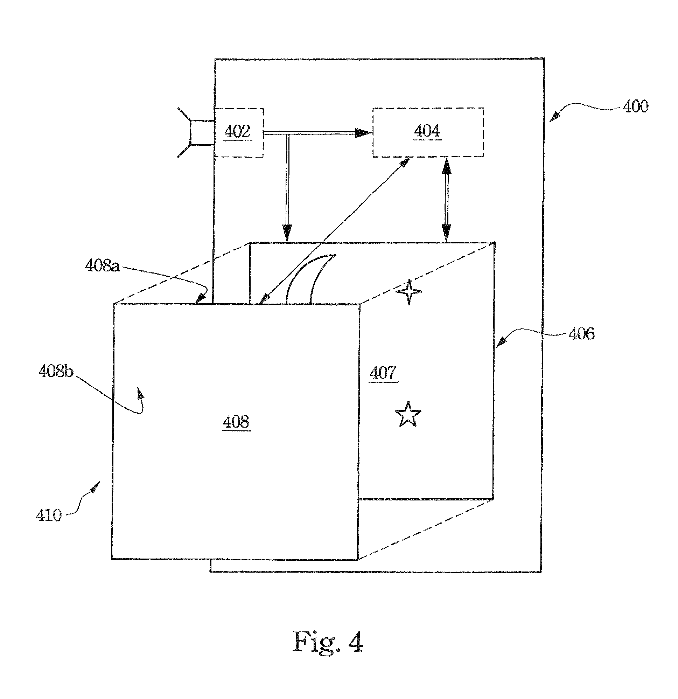

Fig. 4 illustrates schematic elements of the assembly of a cellular phone 400 in accordance with one preferred embodiment of the present invention. In one preferred embodiment of the present invention, the cellular phone 400 comprises an image-capture unit 402, an image magnification/reduction unit 404, a display unit 406, and a position selector 410. The image-capture unit 402 captures a physical image by transforming a physical image into digital signals and these digital signals are in-tum transformed into images that represent the physical image and are displayed on the display unit 406. In some embodiments of the present invention, the image-capture unit 402 comprises an image-detecting element, such as a charge-couple device (CCD) or a complementary metal oxide semiconductor (CMOS). In the present embodiment, the image-capture unit 402 is a digital camera with a CCD set in the cellular phone 400.

The display unit 406 is electrically connected to the image-capture unit 402 and the image magnification/reduction unit 404 respectively. In the present embodiment of the present invention, the display unit 406 may be a liquid crystal display (LCD) or an organic light emitting diode (OLED) display that is Quarter Video Graphic Array (QVGA) standard compliant. The display unit 406 is used to display (present) the image that was previously captured by the image-capture unit 402. Otherwise, the display unit 406 may also display other images, such as images stored in the cellular phone 400, the images stored in a memory card (not shown) available for the cellular phone 400, or the images downloaded from an extra electronic device.

The image magnification/reduction unit 404 connected to the image-capture unit 402 is used to conduct at least one or multiple magnification/reduction processes to continually magnify/reduce the image displayed on the display unit 406 to form at least one magnified/reduced image. For example, the size of each magnified/reduced image may have a ratio of 1% greater/less than that of the latest magnified/reduced image during the continual magnification/reduction processes. In some embodiments of the present invention, the image magnification/reduction unit 404 may be a programmable logic device (PLD), image processing software, an image processing chipset, an image-compression module, an image processing module or an arbitrary combination of the aforementioned electronic devices or software. In the present invention, the preferred image magnification/reduction unit 404 is an image processing chipset in the cellular phone 400.

The position selector 410 with a touch-sensing unit 408 is electrically connected to the image magnification/reduction unit 404. In the present embodiment of the present invention, the touch-sensing unit 408 is a touch panel with a touching surface 408b and a connecting surface 408a conforming to the screen of the display unit 406. The touch panel may be a glass-glass touch panel, a film-glass touch panel, a capacitive touch panel, an analog resistive touch panel, a digital resistive touch panel, a surface acoustic wave touch panel, an optic touch panel or an arbitrary combination thereof. In the present embodiment, the touch-sensing unit 408 (touch panel) is incorporated with the screen of the display unit 406 to form a touch screen.

When a user touches the touching surface 408b with a finger or a stylus, a datum mark is designated and a magnification/reduction command is submitted by the touch, wherein the datum mark is aligned with a focal point of an initial image 407 displayed on the screen of the display unit 406. Then at least one or multiple magnification/reduction processes is continually conducted to magnify/reduce the initial image 407 to form at least one magnified/reduced image in accordance with the datum mark of the image magnification/reduction unit 404, wherein at least one magnified image may have a ratio of 1% greater/less than that of the latest magnified image during the continual magnification/reduction process. And then each of the magnified/reduced images is displayed on the display unit 406 immediately after each magnification/reduction process is completed. Since the datum mark is associated with the focal point of the image 407, and the continual magnification/reduction processes are conducted in accordance with the datum mark, the image 407 is magnified/reduced without shifting the focal point of the image.

In addition, the cellular phone 400 further comprises a image processing unit (not shown) used to subject the photo image 407 displayed on the screen of the display unit 406 to image processing functions, such as a graphic edition, local magnification/reduction, photo rearrangement, coloring, wording or an arbitrary combination thereof to output a second image (not shown).

Another aspect of the present invention is to provide a method to continually magnify/reducc an image displayed on a screen of a handheld electronic device at a desired magnification without shifting the focal point of the image. In some embodiments of the present invention, the method can be implemented with the cellular pone 400 shown in Fig. 4.

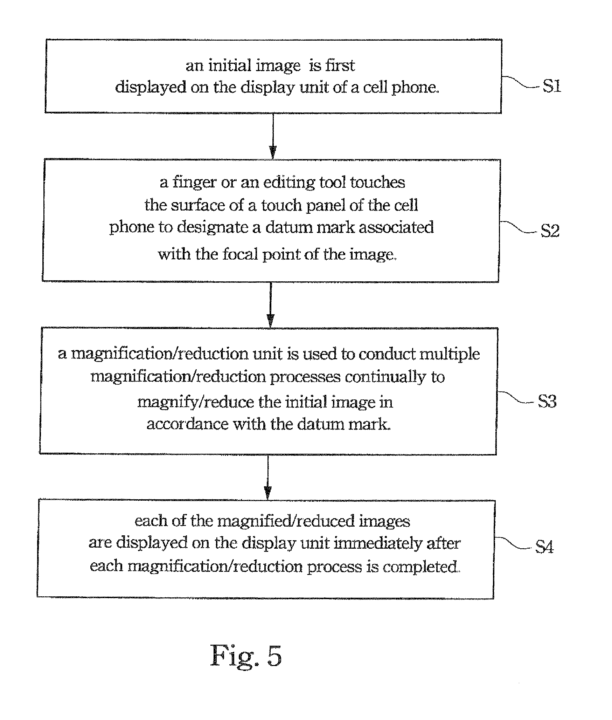

Fig. 5 is a flowchart outlining the magnifcation/reduction process used by the cellular phone 400 shown in Fig. 4, in accordance with the preferred embodiment of the present invention.

Referring to step S1, an initial image 407 is first displayed on the display unit 406 of the cellular phone 400. Referring to step S2, a finger or a stylus touches the surface 408a of the touch panel to designate a datum mark associated with the focal point of the image. Subsequently, the magnification/reduction unit is used to conduct multiple magnification/reduction processes continually to magnify/reduce the initial image 407 in accordance with the datum mark, Referring to step S3, in some embodiments of the present invention, at least one or multiple magnification/reduction processes are conducted by the image magnification/reduction unit 404 to form at least one magnified/reduced image, wherein the size of each of at least one magnified/reduced image has a ratio of 1% greater/less than that of the latest magnified image during the continual magnification/reduction processes. The continual magnification/reduction processes won't stop until the touching surface 408b is not touched and the desired magnification is achieved, whereby the initial image 407 is magnified/reduced without shifting the focal point of the image. Then the magnified/reduced image is displayed on the display unit.

Referring to step S4, each of the magnified/reduced images are displayed on the display unit 406 immediately after each magnification/reduction process is completed.

In some embodiments of the present invention, the aforementioned method further comprises an image-provision step to provide the initial available images for the magnification/reduction processes. In some embodiments of the present invention, the initial images may be captured by an image-capture unit set in the handheld electronic device. However, the initial image may be provided in other ways, for example the initial image can be provide from the images stored in the handheld electronic device, the images stored in a memory card, or the images downloaded from an extra electronic device may also be available for the magnification/reduction processes.

In some embodiments of the present invention, the aforementioned method further comprises image processing functions to process an image before the magnification/reduction processes. Alternatively, the image processing functions can also be conducted after the magnification/reduction processes too. The image processing functions may be a graphic edition, local magnification/reduction, photo rearrangement, coloring, wording or an arbitrary combination thereof.

In accordance with above descriptions, the features of the present invention provide a handheld electronic device with a position selector to designate a datum mark associated with the focal point of an initial image that is displayed on a screen set on the handheld electronic device by touching the position selector. At least one image magnification/reduction process is then continually conducted in accordance with the datum mark for the magnification/reduction of the initial image by a magnification/reduction unit to form at least one magnified/reduced image until the position selector is not touched and the desired magnification is achieved. Each the magnified/reduced image is then displayed on the screen immediately after each magnification/reduction process is completed. Since the datum mark is associated with the focal point of the image, and the continual magnification/reduction processes are conducted in accordance with the datum mark. All a user has to do is touch the touch screen to designate the datum mark, and then the initial image can be magnified/reduced continually without shifting its focal point. The continual magnification/reduction process won't stop until the user stops touching the touch screen while the desired magnification is achieved.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure.

## Claims

1. A handheld electronic device with a function for conducting at least one image magnification/reduction process to magnify/reduce an initial image displayed on the hand held device and to form at least one magnified/reduced image without shifting a focal point of the initial image, comprising:
a display unit, used for displaying the initial image and the at least one magnified/reduced image ;
a position selector, used for designating a datum mark associated with the focal point of the initial image by touching the position selector; and
an image magnification/reduction unit electrically connected to the display unit and the position selector, used for conducting at least one image magnification/reduction process in accordance with the datum mark to form the at least one magnified/reduced image,
whereby each of the at least one magnified/reduced image is then displayed on the display unit without shifting the focal point immediately after each of the at least one magnification/reduction process is completed.

2. The handheld electronic device in accordance with claim 1, further comprising an image-capture unit used to capture the initial image.

3. The handheld electronic device in accordance with claim 1, wherein the image magnification/reduction unit is selected form a group consisting of a programmable logic device (PLD), an image processing software, an image processing chipset, an image-compression module, an image processing module and an arbitrary combination thereof.

4. The handheld electronic device in accordance with claim 1, wherein the position selector comprises a touch panel with a connecting surface and a touching surface.

5. The handheld electronic device in accordance with claim 1, wherein the handheld electronic device is selected from a group consisting of a handheld global positioning system (GPS), a personal digital assistant (PDA), a cellular phone, a digital camera, a notebook computer, a digital photo viewer, digital video displayer (DVD), and the arbitrary combination thereof.

6. A method for magnifying/reducing an initial image on a display unit of a handheld electronic device and displaying the magnified/reduced image without shifting a focal point of the initial image, comprising:
displaying the initial image on a display unit of the handheld electronic device;
touching a position selector of the handheld electronic device for designating a datum mark associated with the focal point;
conducting at least one image magnification/reduction process continually for magnifying/reducing the initial image in accordance with the datum mark to form the at least one magnified/reduced image ; and
displaying each of the at least one magnified/reduced image on the display unit immediately after each of the at least one magnification/reduction process is completed.

7. The method in accordance with claim 6, wherein the step of conducting at least one image magnification/reduction process won't stop until the position selector is not touched and the desired magnification is achieved.

8. The method in accordance with claim 6, further comprising image processing functions to process an image before the magnification/reduction processes.

9. The method in accordance with claim 6, wherein the initial image is provided from the image captured by an image-capture unit of the handheld electronic device.

10. The method in accordance with claim 6, wherein the initial image is provided from an image stored in a memory card or an image downloaded from an extra device.

11. The method in accordance with claim 11, wherein the step of conducting at least one image magnification/reduction process comprises multiple magnification/reduction processes for continually magnifying/reducing the initial image.
